Europäisches Patentamt

European Patent Office

Office européen des brevets

(11) Publication number: **0 021 707**
**B1**

(12) # EUROPEAN PATENT SPECIFICATION

(45) Date of publication of patent specification: **24.11.82**

(51) Int. Cl.³: **G 06 K 13/067**

(21) Application number: **80301944.7**

(22) Date of filing: **10.06.80**

(54) Multiple document detecting system and method of detecting multiple documents.

(30) Priority: **11.06.79 US 47460**

(43) Date of publication of application:
**07.01.81 Bulletin 81/1**

(45) Publication of the grant of the patent:
**24.11.82 Bulletin 82/47**

(84) Designated Contracting States:
**DE FR GB**

(56) References cited:
**GB - A - 817 154**

**IBM TECHNICAL DISCLOSURE BULLETIN, vol.
11, no. 11, April 1969, Armonk, N.Y., USA J. H.
MEIER: "Capacitive document sensing", pages
1593, 1594.**

(73) Proprietor: **NCR CANADA LTD - NCR CANADA
LTEE
6865 Century Avenue
Mississauga Ontario, L5N 2E2 (CA)**

(72) Inventor: **Mazumder, Ali Tazammul
357 Grangewood Drive
Waterloo, Ontario, N2K 2E4 (CA)**

(74) Representative: **Robinson, Robert George
International Patent Department NCR Limited 206
Marylebone Road
London NW1 6LY (GB)**

Multiple document detecting system and method of detecting multiple documents

Technical Field

This invention relates to a multiple document detecting system and to a method of detecting the presence of two or more overlapping documents in a flow of documents.

Background Art

In the field of feeding, separating and sorting documents, there have been many different mechanisms and devices designed to feed and to convey or transport such documents along a path wherein it is important that each and every document being transported follows in successive manner and that two or more documents do not overlap during the time of transport when processing the documents.

Known mechanisms and devices for detecting overlap of documents have included mechanical means such as a lever or like member which would be positioned in one operable condition when there was a single document passing a particular station and in another operable condition when two or more documents were passing at the same time. Other known apparatus have made use of light-sensitive devices having an output at one level when a single document was being fed and an output at another level when the documents were in overlapped condition. Still other apparatus made use of capacitance type sensing devices utilizing the document as a dielectric. Such a device is described, for instance, in the U.S. Patent No. 3 609 735. This patent discloses a device including a sensing probe having a flat metal electrode representing one plate of a capacitor whose other plate is a metal feedboard supporting the document at a sensing station. The capacitance of this capacitor will have one value if there is no document between its plates, a second value if there is a single document, and a third value if there are two superimposed documents between the plates. The detector circuit includes a tuned oscillator and two transformers and a disadvantage of this arrangement resides in its complexity and cost.

Disclosure of the Invention

It is an object of the invention to provide a capacitance type multiple document detecting system which is simpler and less expensive compared with the detector disclosed in the aforementioned U.S. patent.

Thus, according to the invention, there is provided a multiple document detecting system including a capacitive type sensing device through which documents are arranged to pass, characterized by comparison means to which a document sensing signal generated in response to the detection of one or more documents by said detecting system is applied in operation via a first circuit path and via a second circuit path, said signal being delayed during its passage through said second circuit path by virtue of the capacitive effect of said sensing device which effect is greater when two or more overlapping documents pass through said sensing device than when only a single document passes therethrough, and said comparison means being arranged to compare the document sensing signal applied to it via said first circuit path with the delayed document sensing signal applied to it via said second circuit path and to produce an output signal indicative of the amount of the delay brought about in said second circuit path, and means responsive to the output of said comparison means for producing a multiple document detect signal when said output signal is indicative of a delay in excess of a certain amount.

According to another aspect of the invention, there is provided a method of detecting the presence of two or more overlapping documents in a flow of documents transported along a path through a capacitive type sensing device, characterized by the step of comparing a document sensing signal generated in response to the detection of one or more documents passing along said path with said signal delayed by virtue of the capacitive effect of said sensing device so as to produce an output pulse the width of which is dependent on the amount by which said signal is thus delayed, said capacitive effect being greater when two or more overlapping documents pass through said sensing device than when only a single document passes therethrough, and by the further step of filtering out any such output pulse whose width is less than a certain amount, any such output pulse not filtering out being indicative of the passage of two or more overlapping documents through said sensing device.

The multiple document detecting system of the present invention may be used in a document processing apparatus or document shorter in which documents are being fed or transported along a path toward pockets or bins. The documents, e.g. cheques, are usually placed in a document hopper in random manner and a feeder unit is positioned at the hopper to pick off each document from a stack or pile and to initiate individual and successive flow of the documents along the path or track for processing of each document. When the feeder unit advances more than one document at a time, a multiple document detect signal generated by the detecting system of the present invention is used to direct the overlapping documents to a special location or to stop the feeding of the documents along the path.

Brief Description of the Drawings

The invention will now be described by way of example, with reference to the accompanying drawings, in which:—

Fig. 1 is a diagrammatic illustration of processing apparatus which incorporates a multiple document detecting system in accordance with the present invention;

Fig. 2 is a diagrammatic view of a document moving along a path of the processing apparatus;

Fig. 3 is a circuit diagram of the multiple document detecting system of the invention; and

Fig. 4 illustrates timing diagrams of the several signals generated in the circuit diagram elements of Fig. 3.

Best Mode for Carrying out the Invention

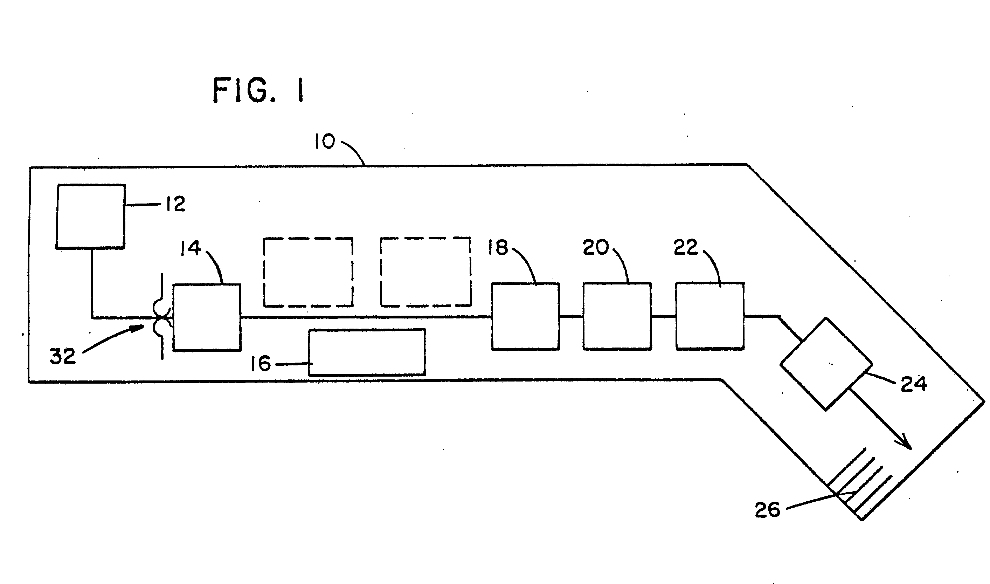

Referring to Fig. 1 of the drawing, the multiple document detecting system of the present invention is utilized in processing apparatus 10, which may be in the nature of a sorting machine or a proof machine, wherein documents such as bank cheques are processed in a data processing operation. A plurality of cheques are placed into a hopper 12, and a feeder (not shown) · adjacent the hopper selectively feeds each document from the hopper along a path to sorting bins or pockets 26 at the other end of the machine. A reader 14 along the document path reads information or data on each cheque for the purpose of validating such data and for initiating or actuating control means for directing each cheque into one of a plurality of the sorting bins or pockets 26 in a manner for separating the cheques according to a desired format or program. A keyboard 16 may be provided for entering of data, such as missing or unreadable fields on the documents, by the operator, and an encoder 18 encodes any missing fields on the cheques or documents. The documents may also have applied thereto an endorsement by an endorser 20, and an identification may be provided by a bank stamp 22, after which both front and back sides of the documents are identified and filmed by a microfilmer 24, following which the documents are transported to the respective bins or pockets 26.

While is is highly desirable that the documents from the hopper are fed in singular manner along the document path so as to correctly and precisely read the information on each cheque and to deposit the cheques in the various pockets, occasionally two or more documents are fed from the hopper at the same time and the processing operation is in error or a jam stops the machine. Additionally, documents may stick together and pass through the transport area without jamming which condition would cause the master or system counter and the physical document count to be out of synchronization.

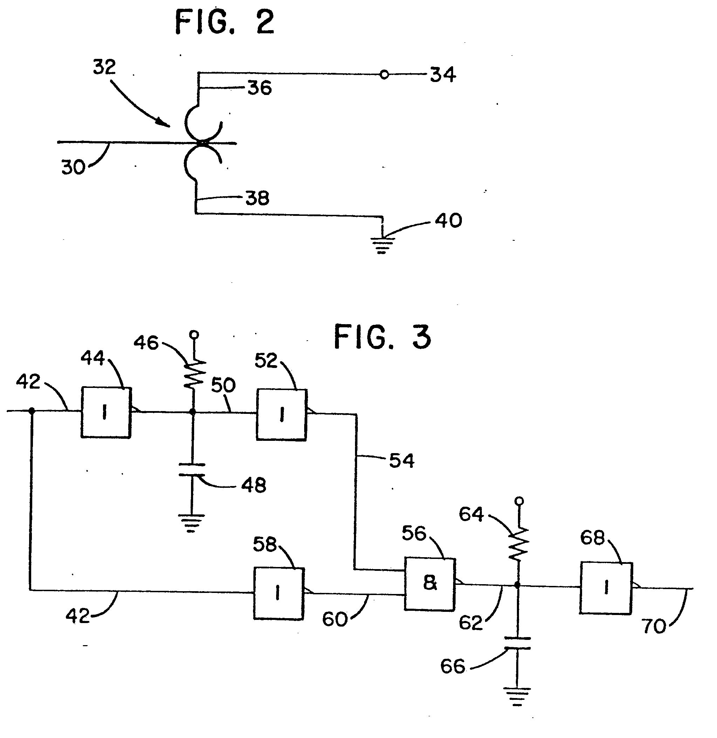

In the multiple document detecting system of the present invention, each document 30 fed from the hopper 12 is directed between two conducting arms 36, 38 of a sensing device 32, which arms are urged towards each other so as to be in contact when no document is present between them. Whenever the leading edge of a document 30 or of two or more overlapping documents enters between such arms 36, 38 and is detected by an LED (not shown), a document sensing signal 42 appears at the input point of the circuit diagram shown in Fig. 3.

The sensing device 32 has, as illustrated in Fig. 2, a terminal 34 for one arm 36 with the other arm 38 being connected to ground potential 40. The sensing device is thus in the form and has the properties of a capacitor when one or more documents 30 are positioned between the arms 36, 38, such documents or documents acting as the dielectric. As documents 30 are transported along their path in the processing apparatus, there is a build-up of static electricity on the documents. It has been found that, due to this build-up of static electricity, the capacitive effect of the sensing device 32 is greater than when two or more documents pass between the arms 36, 38 thereof than when there is only a single document present between the arms 36, 38.

The document sensing signal 42 is transmitted along a first circuit path through· an inverter 58 and the inverted signal 60 is applied to a comparison device formed by a NAND gate 56. The sensing signal 42 is also transmitted along a second circuit path through an inverter 44 with the inverted signal 50 being delayed by an R-C circuit comprising a resistor 46 and a capacitance 48 representing the stray capacitance generated by the presence of one or more than one document passing between the arms 36, 38 of the sensing device 32. The delayed signal 50 is sent through an inverter 52 and the delayed and twice inverted signal 54 is directed to the NAND gate 56. The output pulse 62 from the NAND gate 56 is affected by an R-C circuit comprising a resistor 64 and a capacitance 66, which represents the stray capacitance introduced into the circuit by factors other than the presence of documents, such as the wires connecting the arms 36, 38 to the associated circuitry.

The R-C circuit 64, 66 acts as a filter means which filters out any output pulse 62 having a width less than a certain amount. Any pulse 62 which passes through the R-C circuit 64, 66 is passed through an inverter 68 to generate a multiple document detect signal 70, which will occur if more than one document 30 passes between the conducting arms 36, 38 of the sensing device 32. The signal 70 can be utilized in a manner to flag or alert the operator that two or more documents have passed through the sensing device 32 at the same time. Such signal can also be used to direct the documents to a special pocket or even to stop the machine.

A typical value of the capacitance 48 when two or more overlapping documents 30 are present between the arms 36, 38, is in the range of 50—75 picofarads depending upon the thickness of the documents. A typical value of the capacitance 66 is in the range from 10—30 picofarads. The values of resistors 46 and 64 are selected so that any signal delay caused by the capacitance 48 being less than 40 picofarads is not detected. Thus, it is to be understood that while the transport of both single and double documents introduce capacitance to the circuit, that capacitance produced by a single document within the present embodiment is of an amount to be less than 40 picofarads and hence not detected. This, in effect, restricts the existence of the multiple document detect signal 70 only to those situations where the capacitance introduced to the circuit represents two or more documents being transported in an overlapped condition.

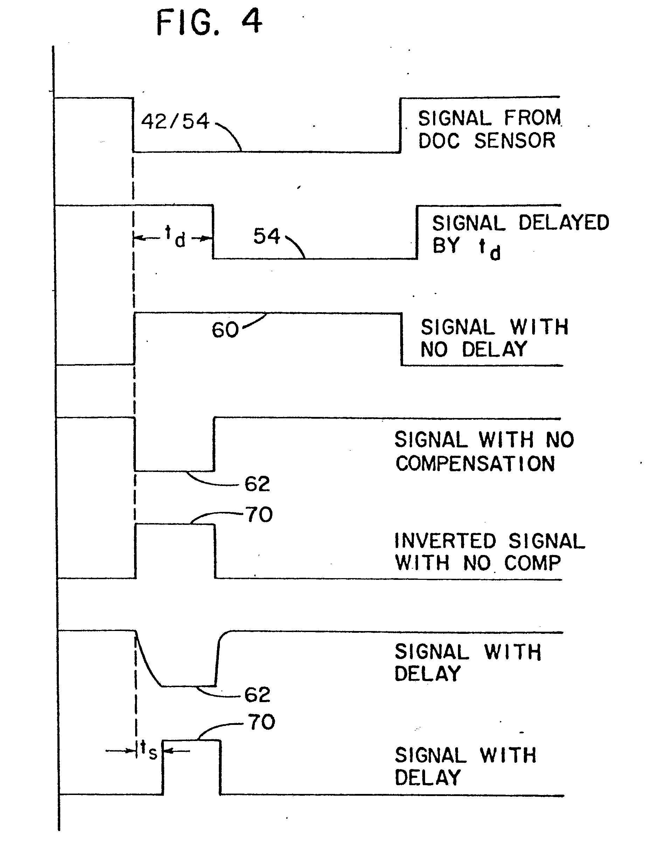

As shown in Fig. 4, which illustrates the timing diagrams of the several signals, the original document sensing signal 42 which is generated when one or more documents 30 pass through the sensing device 32 is a low signal. The twice inverted signal 54 is not significantly changed from the signal 42 (i.e. sensing signal 42 is not delayed significantly) as a result of a single document 30 passing through the sensing device 32. Such signal 54 is however delayed by the value of $t_d$ by reason of the capacitance 48 and resistor 46 combination at the input to the inverter 52 upon two or more overlapped documents passing through the sensing device 32. Signal 60 is the inverted original signal 42 applied to the NAND gate 56 via the inverter 58, with no external delay affecting the signal.

The NAND gate 56 serves to compare the undelayed and inverted signal 42 (i.e. the signal 60) applied to it via the first circuit path including the inverter 58 with the delayed and twice inverted signal 42 (i.e. the signal 54) applied to it via the second circuit path including the inverters 44 and 52. As a result of this comparison, the NAND gate produces the low output pulse 62 whose width is dependent on the amount by which the signal 42 has been delayed in said second circuit path. If the R-C circuit 64, 66 were not present, the inverter 68 would produce a high signal 70 without any delay compared with the pulse 62. However, the presence of the R-C circuit 64, 66 serves to delay an output pulse 62 passing through is so that the multiple document detect signal 70 is delayed by an amount $t_s$. It will be appreciated that if the amount by which the signal 42 is delayed by the R-C circuit 46, 48 is less than $t_s$, then the ouptut pulse 62 from the NAND gate 56 will be so narrow in width that it will be completely filtered out by the R-C circuit 64, 66, so that as a result no multiple document detect signal 70 will be produced.

Thus, the R-C circuit 64, 66 acts as a compensating circuit which ensures that the small delay brought about by the R-C circuit 46, 48 when only a single document 30 passes between the arms 36, 38 of the sensing device 32 does not result in the generation of a multiple document detect signal 70.

**Claims**

1. A multiple document detecting system including a capacitive type sensing device (32) through which documents (30) are arranged to pass, characterized by comparison means (56) to which a document sensing signal (42) generated in response to the detection of one or more documents by said detecting system is applied in operation via a first circuit path (58) and via a second circuit path (44, 46, 48, 52), said signal being delayed during its passage through said second circuit path by virtue of the capacitive effect of said sensing device (32) which effect is greater when two or more overlapping documents (30) pass through said sensing device (32) than when only a single document passes therethrough, and said comparison means (56) being arranged to compare the document sensing signal (42) applied to it via said first circuit path with the delayed document sensing signal applied to it via said second circuit path and to produce an output signal indicative of the amount of the delay brought about in said second circuit path, and means (64, 66, 68) responsive to the output of said comparison means (56) for producing a multiple document detect signal (70) when said output signal is indicative of a delay in excess of a certain amount.

2. A detecting system according to claim 1, characterized in that said sensing device is formed by a pair of arms (36, 38) between which the documents (30) pass in operation, the arms being urged towards each other so as to be in contact when no document is present between them.

3. A detecting system according to claim 2, characterized in that in operation said document sensing signal (42) is delayed by an R-C circuit (46, 48) the capacitance of which is generated by the sensing device (32) with one or more documents positioned between said arms (36, 38).

4. A detecting system according to any one of the preceding claims, characterized in that said comparison means is formed by gate means (56) arranged to produce an output pulse (62) in response to generation of said document sensing signal (42), the width of said output pulse being dependent on the amount by which said document sensing signal is delayed by said R-C circuit (46, 48).

5. A detecting circuit according to claim 4, characterized by filter means (64, 66) arranged to prevent generation of a multiple document detect signal (70) when an output pulse (62) from said gate means (56) has a width less than a certain amount.

6. A detecting circuit according to claim 5, characterized in that said filter means is formed by a further R-C circuit (64, 66).

7. A method of detecting the presence of two or more overlapping documents in a flow of documents transported along a path through a capacitive type sensing device (32), characterized by the step of comparing a document sensing signal (42) generated in response to the detection of one or more documents passing along said path with said signal delayed by virtue of the capacitive effect of said sensing device so as to produce an output pulse (62) the width of which is dependent on the amount by which said signal is thus delayed, said capacitive effect being greater when two or more overlapping documents (30) pass through said sensing device (32) than when only a single document passes therethrough, and by the further step of filtering out any such output pulse whose width is less than a certain amount, any such output pulse not filtered out being indicative of the passage of two or more overlapping documents through said sensing device (32).

**Revendications**

1. Système de détection de documents multiples comprenant un dispositif (32) de détection du type capacitif à travers lequel passent des documents (30), caractérisé par des moyens (56) de comparaison auxquels un signal (42) de détection de documents, produit en réponse à la détection d'un ou plusieurs documents par ledit système de détection, est appliqué en cours de fonctionnement par l'intermédiaire d'un premier circuit (58) et d'un second circuit (44, 46, 48, 52), ledit signal étant retardé lors de son passage dans ledit second circuit par l'effet capacitif dudit dispositif (32) de détection, lequel effet est plus grand lorsque deux ou plusieurs documents (30) se recouvrant passent à travers ledit dispositif (32) de détection que lorsqu'un seul document passe à travers ce dispositif, et lesdits moyens (56) de comparaison étant disposés de manière à comparer le signal (42) de détection de documents qu'ils reçoivent par l'intermédiaire du premier circuit avec le signal de détection de documents retardé qu'ils reçoivent par l'intermédiaire dudit second circuit, et à produire un signal de sortie représentatif de l'importance du retard causé par ledit second circuit, et des moyens (64, 66, 68) réagissant au signal de sortie desdits moyens (56) de comparaison en produisant un signal (70) de détection de documents multiples lorsque ledit signal de sortie indique un retard supérieur à une certaine amplitude.

2. Système de détection selon la revendication 1, caractérisé en ce que ledit dispositif de détection est constitué de deux bras (36, 38) entre lesquels les documents (30) passent en cours de fonctionnement, les bras étant rappelés l'un vers l'autre afin d'être en contact lorsqu'aucun document n'est présent entre eux.

3. Système de détection selon la revendication 2, caractérisé en ce que, en cours de fonctionnement, ledit signal (42) de détection de documents est retardé par un circuit R-C (46, 48) dont la capacité est produite par le dispositif (32) de détection alors qu'un ou plusieurs documents sont placés entre lesdits bras (36, 38).

4. Système de détection selon l'une quelconque des revendications précédentes, caractérisé en ce que lesdits moyens de comparaison comprennent un élément (56) de déclenchement monté de manière à produire une impulsion (62) de sortie en réponse à la génération dudit signal (42) de détection de documents, la largeur de ladite impulsion de sortie dépendant le l'amplitude du retard donné audit signal de détection de documents par ledit circuit R-C (46, 48).

5. Circuit de détection selon la revendication 4, caractérisé par un élément de filtrage (64, 66) monté de manière à empêcher la génération d'un signal (70) de détection de documents multiples lorsqu'une impulsion de sortie (62) provenant dudit élément (56) de déclenchement a une largeur inférieure à une certaine valeur.

6. Circuit de détection selon la revendication 5, caractérisé en ce que ledit élément de filtrage est formé par un autre circuit R-C (64, 66).

7. Procédé de détection de la présence de deux documents ou plus se recouvrant dans une file de documents transportés suivant un trajet traversant un dispositif (32) de détection du type capacitif, caractérisé par l'étape consistant à comparer un signal (42) de détection de documents, produit en réponse à la détection d'un ou plusieurs documents passant le long dudit trajet, avec ledit signal retardé par l'effet capacitif dudit dispositif de détection afin de produire une impulsion (62) de sortie dont la largeur dépend de l'amplitude dudit signal ainsi retardé, ledit effet capacitif étant plus grand lorsque deux documents (30) ou plus se recouvrant passent à travers ledit dispositif (32) de détection que lorsqu'un seul document passe à travers ce dispositif, et par une autre étape consistant à éliminer par filtrage toute impulsion de sortie dont la largeur est inférieure à une certaine valeur, toute impulsion de sortie qui n'est pas éliminée par filtrage indiquant le pasage de deux documents ou plus se recouvrant à travers ledit dispositif (32) de détection.

**Patentansprüche**

1. System zum Feststellen von Mehrfach-Dokumenten, mit einer kapazitivartigen Abfastvorrichtung (32), durch die Dokumente (30) zu laufen habe, gekennzeichnet durch eine Vergleichsvorrichtung (56), an die ein abhängig von der Feststellung eines oder mehrerer Dokumente durch das Feststellsystem erzeugtes Dokument Abtastsignal (42) im Betrieb über einen ersten Schaltungspfad (58) und über einen zweiten Schaltungspfad (44, 46, 48, 52) angelegt wird, wobei das Signal während seines Durchlaufs durch den zweiten Schaltungspfad infolge der kapazitiven Wirkung der Abtastvorrichtung (32) verzögert wird, wobei die Wirkung größer ist, wenn zwei oder mehrere sich überlappende Dokumente (30) durch die Abtastvorrichtung (32) laufen, als wenn nur ein einziges Dokument durchläuft, und daß die Vergleichsvorrichtung (56) angeordnet ist, um das an sie über den ersten Schaltungspfad angelegte Dokument-Abtastsignal (42) mit dem an sie über den zweiten Schaltungspfad angelegten verzögerten Dokument-Abtastsignal zu vergleichen und ein Ausgangssignal zu erzeugen, das den Betrag der durch den zweiten Schaltungspfad bewirkten Verzögerung anzeigt, und durch Mittel (64, 66, 68), die auf das Ausgangssignal der Vergleichsvorrichtung (56) zur Erzeugung eines Mehrfachdokument-Feststellsignals (70) ansprechen, wenn das Ausgangssignal eine Verzögerung über einem bestimmten Betrag anzeigt.

2. Feststellsystem nach Anspruch 1, dadurch gekennzeichnet, daß die Abtastvorrichtung durch zwei Arme (36, 38) gebildet wird, zwischen denen im Betrieb die Dokumente (30) hindurchlaufen, wobei die Arme gegeneinander gedrückt werden, so daß sie in Kontakt sind, wenn sich kein Dokument zwischen ihnen befindet.

3. Feststellsystem nach Anspruch 2, dadurch gekennzeichnet, daß im Betrieb das Dokument-Abtastsignal (42) durch eine RC-Schaltung (46, 48) verzögert wird, deren Kapazität durch die Abtastvorrichtung (32) erzeugt wird, wenn sich ein oder mehrere Dokumente zwischen den Armen (36, 38) befinden.

4. Feststellsystem nach einem der vorhergehenden Ansprüche, dadurch gekennzeichnet, daß die Vergleichsvorrichtung durch Gattermittel (56) gebildet wird, die angeordnet sind, um einen Ausgangsimpuls (62), abhängig von der Erzeugung des Dokument-Abtastsignals (42) zu erzeugen, wobei die Breite des Ausgangsimpulses abhängig ist von dem Wert, um den das Dokument-Abtastsignal durch die RC-Schaltung (46, 48) verzögert wird.

5. Feststellschaltung nach Anspruch 4, gekennzeichnet durch Filtermittel (64, 66), die angeordnet sind, um die Erzeugung eines Mehrfachdokument-Feststellsignals (70) zu verhindern, wenn ein Ausgangsimpuls (62) von den Gattermitteln (56) eine Breite besitzt, die geringer als ein bestimmter Wert ist.

6. Feststellschaltung nach Anspruch 5, dadurch gekennzeichnet, daß die Filtermittel durch eine weitere RC-Schaltung (64, 66) gebildet werden.

7. Verfahren zum Feststellen der Anwesenheit zweier oder mehrerer sich überlappender Dokumente in einem Fluß von Dokumenten, die längs eines Pfades durch eine kapazitivartige Abtastvorrichtung (32) gefördert werden, gekennzeichnet durch den Schritt Vergleichen eines Dokumentabtastsignals (42), das in Abhängigkeit von der Feststellung eines oder mehrerer längs des Pfades laufender Dokumente erzeugt wird, mit dem infolge der kapazitiven Wirkung der Abtastvorrichtung verzögerten Signal, um einen Ausgangsimpuls (62) mit einer Breite zu erzeugen, die abhängig ist, von dem Wert, durch den das Signal damit verzögert wird, wobei die kapazitive Wirkung größer ist, wenn zwei oder mehrere sich überlappende Dokumente (30) durch die Abtastvorrichtung (32) laufen, als wenn nur ein einziges Dokument hindurchläuft, und durch den weiteren Schritt Ausfiltern eines derartigen Ausgangsimpulses, dessen Breite geringer ist, als ein bestimmter Wert, wobei ein derartiger Ausgangsimpuls, der nicht ausgefiltert wird, anzeigt, daß zwei oder mehrere sich überlappende Dokumente durch die Abtastvorrichtung (32) laufen.

FIG. 1

## FIG. 2

## FIG. 3

# FIG. 4

SIGNAL FROM
DOC SENSOR   42/54

SIGNAL DELAYED
BY $t_d$   54   $t_d$

SIGNAL WITH
NO DELAY   60

SIGNAL WITH NO
COMPENSATION   62

INVERTED SIGNAL
WITH NO COMP   70

SIGNAL WITH
DELAY   62

SIGNAL WITH
DELAY   70   $t_s$